# EUROPEAN PATENT APPLICATION

(11) **EP 4 443 533 A1**
(43) Date of publication of application: **09.10.2024**
(21) Application number: 22900932.9
(22) Date of filing: 14.10.2022
(51) Int. Cl.: H01M 4/13, H01M 4/36, H01M 4/38, H01M 4/587, H01M 4/66

(54) **LITHIUM ION SECONDARY BATTERY**

(30) Priority: 30.11.2021 JP 2021194980
(71) Applicant: Panasonic Intellectual Property Management Co., Ltd., Osaka-shi, Osaka 540-6207 (JP)
(72) Inventor: TANI Yuji, Osaka 571-0057 (JP); SATO Yosuke, Osaka 571-0057 (JP)
(74) Representative: Eisenführ Speiser
(86) International application number: PCT/JP2022/038361
(87) International publication number: WO 2023/100498

(57) **Abstract**

The present invention provides a lithium ion secondary battery which has a high capacity and is suppressed in breakage and elongation of the negative electrode due to repeated charging and discharging. A lithium ion secondary battery as an example of the embodiment of the present invention is provided with a positive electrode, a negative electrode, a separator which separates the positive electrode and the negative electrode from each other, and an electrolyte. The negative electrode comprises a negative electrode collector and a negative electrode mixture layer that is formed on the surface of the negative electrode collector; the thickness of the negative electrode collector is 4 µm to 12 µm; the 1% proof stress of the negative electrode collector is 300 MPa to 700 MPa; the negative electrode mixture layer contains a carbon-based material and a silicon-based material, which serve as negative electrode active materials; the discharge capacity of the negative electrode active materials is 400 mAh/g to 750 mAh/g; the carbon-based material contains a carbon-based material A and a carbon-based material B, which have different particle fracture strengths from each other; the particle fracture strength of the carbon-based material A is 5 MPa to 15 MPa; and the particle fracture strength of the carbon-based material B is 25 MPa to 40 MPa.

## Description

### TECHNICAL FIELD

The present disclosure relates to a lithium-ion secondary battery.

### BACKGROUND ART

Lithium-ion secondary batteries are widely used as a power source for devices including electric vehicles, and further higher capacity and longer lifetime have been desired. To increase the capacity of a negative electrode, it has been investigated to use a silicon-based material, which has a larger capacity per volume than a carbon-based material such as graphite, as a negative electrode active material. However, the volume of the silicon-based material changes largely during charge and discharge, and due to this volumetric change, a battery containing a negative electrode active material composed of the carbon-based material and the silicon-based material may be deformed. Patent Literature 1 discloses a technique of inhibiting the deformation of the battery by using a high-strength negative electrode current collector.

### CITATION LIST

### PATENT LITERATURE

PATENT LITERATURE 1: International Publication No. WO 2013/047432

### SUMMARY

However, the present inventors have found as a result of intensive study that a higher proportion of the silicon-based material in the negative electrode active material may cause breakage or elongation of the negative electrode. The breakage and elongation of the negative electrode are not investigated in the technique of Patent Literature 1, leaving room for improvement.

It is an advantage of the present disclosure to provide a lithium-ion secondary battery that has a high capacity and that inhibits the breakage and elongation of the negative electrode due to repeated charge and discharge.

A lithium-ion secondary battery of an aspect of the present disclosure comprises: a positive electrode; a negative electrode; a separator that separates the positive electrode and the negative electrode from each other; and an electrolyte, wherein the negative electrode has a negative electrode current collector and a negative electrode mixture layer formed on a surface of the negative electrode current collector, the negative electrode current collector has a thickness of greater than or equal to 4 µm and less than or equal to 12 µm, and the negative electrode current collector has a 1%-proof strength of greater than or equal to 300 MPa and less than or equal to 700 MPa, the negative electrode mixture layer includes a carbon-based material and a silicon-based material as a negative electrode active material, and the negative electrode active material has a discharge capacity of greater than or equal to 400 mAh/g and less than or equal to 750 mAh/g, the carbon-based material includes a carbon-based material A and a carbon-based material B that have particle fracture strengths different from each other, and the carbon-based material A has a particle fracture strength of greater than or equal to 5 MPa and less than or equal to 15 MPa, and the carbon-based material B has a particle fracture strength of greater than or equal to 25 MPa and less than or equal to 40 MPa.

The lithium-ion secondary battery of an aspect of the present disclosure has a high capacity, and can inhibit breakage and elongation of the negative electrode due to repeated charge and discharge.

### BRIEF DESCRIPTION OF DRAWINGS

FIG. 1 is a sectional view of a lithium-ion secondary battery of an example of an embodiment.
FIG. 2 is a view indicating a relationship between strain and stress in a tensile test on a negative electrode current collector.

### DESCRIPTION OF EMBODIMENTS

The present inventors have intensively investigated increase in a capacity of a lithium-ion secondary battery, and consequently found that increase in a content rate of a silicon-based material in the negative electrode mixture layer may cause breakage or elongation of a negative electrode. This is presumably because stress involved with expansion and contraction of the silicon compound during charge and discharge is not dispersed to concentrate at a local portion. The present inventors have made further investigation and found that breakage and elongation of the negative electrode due to repeated charge and discharge may be inhibited by using a predetermined negative electrode even when a proportion of the silicon-based material in the negative electrode active material is increased to set a discharge capacity of the negative electrode to greater than or equal to 400 mAh/g and less than or equal to 750 mAh/g. More specifically, the above defect may be inhibited by using a negative electrode having: a negative electrode current collector having a thickness of greater than or equal to 4 µm and less than or equal to 12 µm and a 1%-proof strength of greater than or equal to 300 MPa and less than or equal to 700 MPa; and a negative electrode mixture layer including two types of carbon-based materials having different particle fracture strengths.

Hereinafter, an example of embodiments of the negative electrode according to the present disclosure and the lithium-ion secondary battery using the negative electrode will be described in detail with reference to Drawings. Note that, the present disclosure includes selectively combining a plurality of embodiments and modified examples described below.

Hereinafter, a cylindrical battery in which a wound electrode assembly 14 is housed in a bottomed cylindrical exterior housing can 16 will be exemplified, but the exterior of the battery is not limited to a cylindrical exterior housing can, and may be, for example, a rectangular exterior housing can (rectangular battery), a coin-shaped exterior housing can (coin-shaped battery), or an exterior composed of laminated sheets including a metal layer and a resin layer (laminated battery). The electrode assembly may be a stacked electrode assembly in which a plurality of positive electrodes and a plurality of negative electrodes are alternately stacked with a separator interposed therebetween.

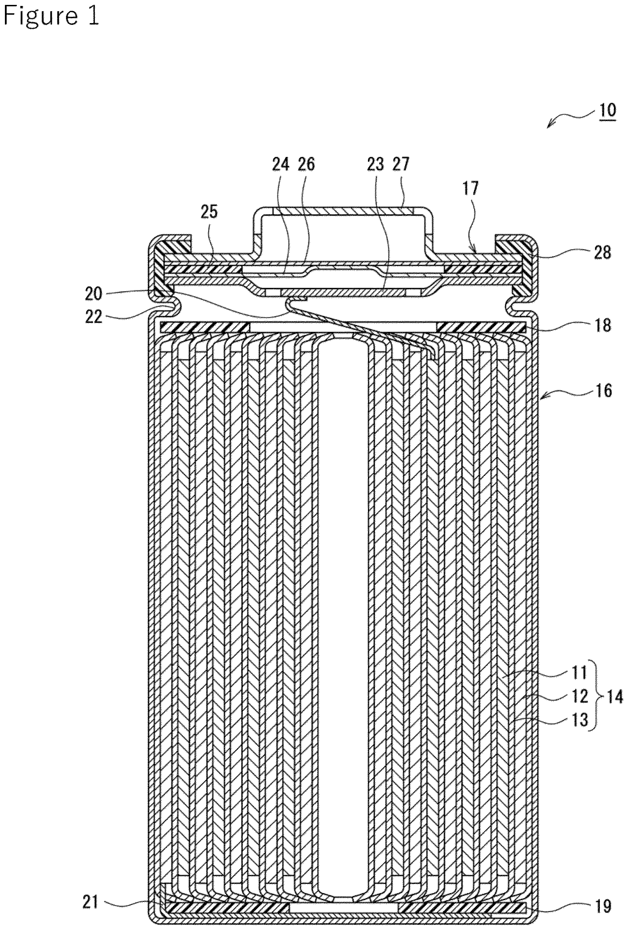

FIG. 1 is a view schematically illustrating a cross section of a lithium-ion secondary battery 10 of an example of an embodiment. As illustrated in FIG. 1, the lithium-ion secondary battery 10 comprises the wound electrode assembly 14, an electrolyte, and the exterior housing can 16 housing the electrode assembly 14 and the electrolyte. The electrode assembly 14 has a positive electrode 11, a negative electrode 12, and a separator 13, and has a wound structure in which the positive electrode 11 and the negative electrode 12 are spirally wound with the separator 13 interposed therebetween. The exterior housing can 16 is a bottomed cylindrical metallic container having an opening on one side in an axial direction, and the opening of the exterior housing can 16 is sealed with a sealing assembly 17. Hereinafter, for convenience of description, the sealing assembly 17 side of the battery will be described as the upper side, and the bottom side of the exterior housing can 16 will be described as the lower side.

The electrolyte, for example, includes a non-aqueous solvent and an electrolyte salt dissolved in the non-aqueous solvent. For the non-aqueous solvent, esters, ethers, nitriles, amides, a mixed solvent of two or more thereof, and the like are used, for example. The non-aqueous solvent may contain a halogen-substituted derivative in which hydrogen of these solvents is at least partially replaced with a halogen atom such as fluorine. An example of the non-aqueous solvent is ethylene carbonate (EC), ethyl methyl carbonate (EMC), dimethyl carbonate (DMC), a mixed solvent thereof, or the like. For the electrolyte salt, a lithium salt such as LiPF₆ is used, for example. The electrolyte is not limited to a liquid electrolyte but may be a solid electrolyte.

The positive electrode 11, the negative electrode 12, and the separator 13, which constitute the electrode assembly 14, are all a band-shaped elongated body, and spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction (short direction). Two separators 13 are formed to be one size larger than at least the positive electrode 11, and disposed to sandwich the positive electrode 11. The electrode assembly 14 has a positive electrode lead 20 connected to the positive electrode 11 by welding or the like and a negative electrode lead 21 connected to the negative electrode 12 by welding or the like.

Insulating plates 18 and 19 are disposed on the upper and lower sides of the electrode assembly 14, respectively. In the example illustrated in FIG. 1, the positive electrode lead 20 extends through a through hole of the insulating plate 18 toward the sealing assembly 17 side, and the negative electrode lead 21 extends through an outside of the insulating plate 19 toward the bottom side of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

The exterior housing can 16 is a bottomed cylindrical metallic container having an opening on one side in an axial direction, as noted above. A gasket 28 is provided between the exterior housing can 16 and the sealing assembly 17, thereby sealability inside the battery and insulation between the exterior housing can 16 and the sealing assembly 17 are ensured. On the exterior housing can 16, a grooved portion 22 in which a part of a side wall thereof projects inward to support the sealing assembly 17 is formed. The grooved portion 22 is preferably formed in a circular shape along a circumferential direction of the exterior housing can 16, and supports the sealing assembly 17 with the upper face thereof. The sealing assembly 17 is fixed on the upper part of the exterior housing can 16 with the grooved portion 22 and with an end part of the opening of the exterior housing can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central parts thereof, and the insulating member 25 is interposed between each of the circumferential parts. If the internal pressure increases due to battery abnormality, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through an opening of the cap 27.

Hereinafter, the positive electrode 11, the negative electrode 12, and the separator 13, which constitute the lithium-ion secondary battery 10, specifically the negative electrode 12, will be described in detail.

### [Positive Electrode]

The positive electrode 11 has a positive electrode current collector and a positive electrode mixture layer formed on a surface of the positive electrode current collector. For the positive electrode current collector, a foil of a metal stable within a potential range of the positive electrode 11, such as aluminum and an aluminum alloy, a film in which such a metal is disposed on a surface layer thereof, and the like may be used. The positive electrode mixture layer includes a positive electrode active material, a conductive agent, and a binder, and is preferably provided on both surfaces of the positive electrode current collector except for a current collector exposed portion, which is a portion where a positive electrode lead is to be connected. A thickness of the positive electrode mixture layer is, for example, greater than or equal to 50 µm and less than or equal to 200 µm on one side of the positive electrode current collector. The positive electrode mixture layer may be formed by, for example, applying a positive electrode mixture slurry including the positive electrode active material, the conductive agent, the binder, and the like on the surface of the positive electrode current collector, and drying and then compressing the coating.

The positive electrode active material is constituted with a lithium-transition metal composite oxide as a main component. Examples of an element contained in the lithium-transition metal composite oxide and excluding Li include Ni, Co, Mn, Al, B, Mg, Ti, V, Cr, Fe, Cu, Zn, Ga, Sr, Zr, Nb, In, Sn, Ta, W, Si, and P. An example of the preferable lithium-transition metal composite oxide is a composite oxide containing at least one of Ni, Co, and Mn. Specific examples thereof include a lithium-transition metal composite oxide containing Ni, Co, and Mn, and a lithium-transition metal composite oxide containing Ni, Co, and Al.

Examples of the conductive agent included in the positive electrode mixture layer include carbon-based particles such as carbon black, acetylene black, Ketjenblack, carbon nanotube, graphene, and graphite. Examples of the binder included in the positive electrode mixture layer include a fluororesin such as polytetrafluoroethylene (PTFE) and polyvinylidene fluoride (PVDF), polyacrylonitrile (PAN), a polyimide resin, an acrylic resin, and a polyolefin resin. With these resins, a cellulose derivative such as carboxymethylcellulose (CMC) or a salt thereof, polyethylene oxide (PEO), and the like may be used in combination.

### [Negative Electrode]

The negative electrode 12 has a negative electrode current collector and a negative electrode mixture layer formed on a surface of the negative electrode current collector. The negative electrode mixture layer is preferably provided on both surfaces of the negative electrode current collector. A thickness of the negative electrode current collector is greater than or equal to 4 µm and less than or equal to 12 µm. A thickness of the negative electrode mixture layer is, for example, greater than or equal to 50 µm and less than or equal to 200 µm on one side of the negative electrode current collector.

For the negative electrode current collector, a foil of a metal stable within a potential range of the negative electrode, such as copper and a copper alloy, a film in which such a metal is disposed on a surface layer thereof, and the like may be used. The negative electrode current collector is preferably copper. A crystal grain size of copper as the negative electrode current collector is preferably greater than or equal to 0.2 µm and less than or equal to 2 µm. The crystal grain size may be measured by using SEM-EBSD (electron backscatter diffraction) and the like.

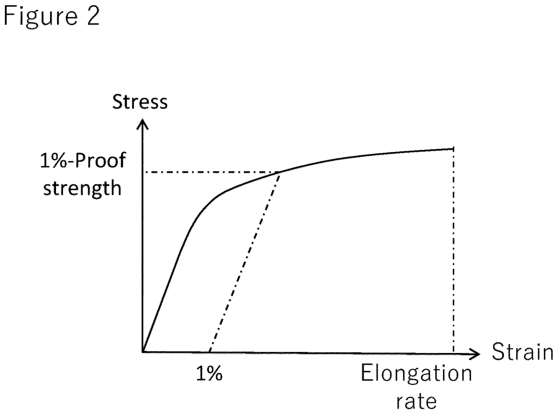

The negative electrode current collector has a 1%-proof strength of greater than or equal to 300 MPa and less than or equal to 700 MPa. The 1%-proof strength is a proof strength (1%) measured by a metal material tensile test method of JIS Z 2241. FIG. 2 is a schematic view indicating a relationship between strain and stress in the tensile test on the negative electrode current collector. The 1%-proof strength is a value of stress when the strain is 1%. The 1%-proof strength of the negative electrode current collector may be regulated by, for example, the thickness of the negative electrode current collector and the crystal grain size of the material of the negative electrode current collector. Use of the negative electrode current collector having a thickness of greater than or equal to 4 µm and less than or equal to 12 µm and a 1%-proof strength of greater than or equal to 300 MPa and less than or equal to 700 MPa together with a predetermined separator, described later, may inhibit breakage and elongation of the negative electrode due to repeated charge and discharge.

The negative electrode current collector has a breakage elongation of, for example, greater than or equal to 2% and less than or equal to 9%. Here, the breakage elongation is a value of an amount of elongation of a specimen broken in a tensile test divided by a length of the specimen before the tensile test, and the breakage elongation is represented as percentage. In FIG. 2, the breakage elongation is a value of strain when the negative electrode current collector breaks.

The negative electrode mixture layer includes: a negative electrode active material having a discharge capacity of greater than or equal to 400 mAh/g and less than or equal to 750 mAh/g; and a conductive agent. The negative electrode mixture layer may include a binder and the like in addition to the negative electrode active material and the conductive agent. The negative electrode mixture layer may be formed by, for example, applying a negative electrode mixture slurry including the negative electrode active material, the conductive agent, the binder, and the like on both surfaces of the negative electrode current collector, and drying and then compressing the coating.

The negative electrode mixture layer has a porosity of greater than or equal to 20% and less than or equal to 40%. The porosity of the negative electrode mixture layer is calculated according to the following formula from a bulk density of the negative electrode mixture layer and a true density and content mass of each component included in the negative electrode mixture layer, such as the negative electrode active material, the conductive agent, the binder, and the like. As described later, the bulk density of the negative electrode mixture layer may be changed by regulating a particle fracture strength of the carbon-based material being the negative electrode active material, and thereby the porosity of the negative electrode mixture layer may be changed. The porosity may be measured by mercury porosimetry using a mercury porosimeter (for example, AutoPore IV9510 type, manufactured by Micromeritics Instrument Corporation). Porosity of negative electrode mixture layer = 1- (Sum of (Content mass / True density) of each component × Bulk density of negative electrode mixture layer)

Examples of the conductive agent included in the negative electrode mixture layer include: particle conductive agents such as carbon black, acetylene black, Ketjenblack, and graphite; and fibrous conductive agents such as vapor-grown carbon fiber (VGCF), electrospinning carbon fiber, polyacrylonitrile (PAN)-based carbon fiber, pitch-based carbon fiber, carbon nanotube, and graphene. The negative electrode mixture layer preferably includes carbon nanotube.

For the binder included in the negative electrode mixture layer, a fluororesin, PAN, a polyimide, an acrylic resin, a polyolefin, and the like may be used as in the case of the positive electrode 11, but styrene-butadiene rubber (SBR) is preferably used. The negative electrode mixture layer may further include CMC or a salt thereof, polyacrylic acid (PAA) or a salt thereof, polyvinyl alcohol (PVA), and the like. For the binder included in the negative electrode mixture layer, SBR; and CMC or a salt thereof, or PAA or a salt thereof are preferably used in combination.

The negative electrode active material includes a carbon-based material and a silicon-based material. The negative electrode active material may include a material other than the carbon-based material and the silicon-based material, which may occlude and release Li.

A proportion of the silicon-based material in the negative electrode active material may be greater than or equal to 5 mass% and less than or equal to 30 mass% relative to a total amount of the carbon-based material and the silicon-based material. The negative electrode active material mixed at such a proportion has a discharge capacity of greater than or equal to 400 mAh/g and less than or equal to 750 mAh/g.

The discharge capacity CA (mAh/g) of the negative electrode active material, the thickness CT (µm) of the negative electrode current collector, and the 1%-proof strength CM (N/mm²) of the negative electrode current collector preferably satisfy a relationship of CA/(CM × CT) < 0.3.

The carbon-based material may be at least one selected from the group consisting of natural graphite, artificial graphite, soft carbon, and hard carbon. Particularly, natural graphite or artificial graphite, which has excellent charge-discharge stability and a small irreversible capacity, is preferable. Examples of the natural graphite include flake graphite, massive graphite, and amorphous graphite, and examples of the artificial graphite include massive artificial graphite and graphitized mesophase-carbon microbead.

The carbon-based material may include a carbon-based material A and a carbon-based material B that have particle fracture strengths different from each other. The carbon-based material A has a particle fracture strength of, for example, greater than or equal to 5 MPa and less than or equal to 15 MPa, and the carbon-based material B has a particle fracture strength of, for example, greater than or equal to 25 MPa and less than or equal to 40 MPa. This provides different easiness to be cracked of the carbon-based material A and the carbon-based material B in compressing the negative electrode mixture layer in producing the negative electrode, which makes it possible to regulate the porosity of the negative electrode mixture layer to be within the range of greater than or equal to 20% and less than or equal to 40%. Average particle diameters of the carbon-based material A and the carbon-based material B before the compression are, for example, greater than or equal to 15 µm and less than or equal to 25 µm.

The particle fracture strength may be calculated by using a micro compression tester (for example, MCT-211, manufactured by SHIMADZU CORPORATION). Onto one lithium-transition metal composite oxide, a load is applied with an upper pressurizing indenter with a plane tip with ϕ50 µm under a condition of a load rate of 2.7 mN/sec, and a fracture load at a time when the lithium-transition metal composite oxide is fractured is measured. The fracture load is measured in the same manner on ten lithium-transition metal composite oxides to specify an average value thereof as the particle fracture strength.

A proportion of the carbon-based material A in the carbon-based material may be greater than or equal to 20 mass% and less than or equal to 40 mass% relative to a total amount of the carbon-based material A and the carbon-based material B.

Examples of the silicon-based material include Si metal that forms an alloy with Li, a metal compound including Si, and a composite oxide including Si. The silicon-based material includes, for example, an ion-conductive phase, silicon particles dispersed in the ion-conductive phase, and a coating layer that covers a surface of the ion-conductive phase.

The ion-conductive phase is, for example, at least one selected from the group consisting of a silicate phase, an amorphous carbon phase, and a silicide phase.

SiO, which is an example of the silicon-based material, has a particle structure in which fine silicon particles are dispersed in a silicate phase. A preferable SiO has a sea-island structure in which fine silicon particles are substantially uniformly dispersed in an amorphous silicon oxide matrix, and represented by the general formula SiOₓ (0<x≤2). The silicate phase is composed of aggregation of particles finer than the silicon particles. A content rate of the silicon particles is preferably greater than or equal to 35 mass% and less than or equal to 75 mass% relative to a total mass of SiO from the viewpoints of achievement of both a battery capacity and cycle characteristics, and the like.

The ion-conductive phase may include at least one element selected from the group consisting of alkali metal elements and Group II elements. For example, a compound represented by the general formula Li_{2z}SiO_{(2+z)} (0<z<2) is the silicon-based material, and has a sea-island structure in which fine Si particles are substantially uniformly dispersed in a lithium silicate matrix. The lithium silicate phase is composed of aggregation of particles finer than the silicon particles. A content rate of the silicon particles is preferably greater than or equal to 35 mass% and less than or equal to 75 mass% relative to a total mass of the Li_{2z}SiO_{(2+z)} compound, as in the case of SiO.

Si-C, which is another example of the silicon-based material, has a particle structure in which fine silicon particles are dispersed in an amorphous carbon phase. A preferable Si-C has a sea-island structure in which fine silicon particles are substantially uniformly dispersed in an amorphous carbon phase matrix. A content of the Si particles is preferably greater than or equal to 35 mass% and less than or equal to 75 mass% relative to a total mass of Si-C from the viewpoints of increasing the capacity, and the like.

The ion-conductive phase may include an element M, and the element M may be at least one selected from the group consisting of B, Al, Zr, Nb, Ta, V, La, Y, Ti, P, Bi, Zn, Sn, Pb, Sb, Co, Er, F, and W.

Examples of a constituent material of the coating layer include a carbon material, a metal, and a metal compound, and the constituent material is particularly preferably a carbon material such as amorphous carbon. The coating layer may be formed by: a CVD method using acetylene, methane, or the like; a method in which coal pitch, petroleum pitch, a phenol resin, or the like is mixed with silicon compound particles, and the mixture is subjected to a thermal treatment; and the like, for example. The coating layer may also be formed by adhering a conductive filler such as carbon black onto a surface of the ion-conductive phase using a binder.

### [Separator]

The separator 13 separates the positive electrode 11 and the negative electrode 12 each other. For the separator 13, a porous sheet having an ion permeation property and an insulation property is used. Specific examples of the porous sheet include a fine porous thin film, a woven fabric, and a nonwoven fabric. As a material of the separator 13, a polyolefin such as polyethylene, polypropylene, and a copolymer of ethylene and an α-olefin, cellulose, and the like are preferable. The separator 13 may have any of a single layer structure and a stacked structure. On a surface of the separator 13, a heat-resistant layer including inorganic particles, a heat-resistant layer constituted with a highly heat-resistant resin such as an aramid resin, a polyimide, and a polyamide imide, and the like may be formed.

### EXAMPLES

Hereinafter, the present disclosure will be further described with Examples, but the present disclosure is not limited to these Examples.

### <Example 1>

### [Production of Positive Electrode]

As a positive electrode active material, a lithium-transition metal composite oxide represented by LiCo_{1/3}Mn_{1/3}Ni_{1/3}O₂ was used. Mixing 98 parts by mass of the positive electrode active material, 1 part by mass of acetylene black, and 1 part by mass of polyvinylidene fluoride was performed, and N-methyl-2-pyrrolidone (NMP) was used as a dispersion medium to prepare a positive electrode mixture slurry. Then, this positive electrode mixture slurry was applied on both surfaces of a positive electrode current collector made of aluminum foil, the coating was dried and compressed, and then cut to a predetermined electrode size to produce a positive electrode in which positive electrode mixture layers were formed on both the surfaces of the positive electrode current collector. An exposed portion where the current collector surface was exposed was provided at a central portion in a longitudinal direction of the positive electrode, and a positive electrode lead was welded to this exposed portion.

### [Production of Negative Electrode]

An artificial graphite A having a particle fracture strength of 10 MPa and an artificial graphite B having a particle fracture strength of 35 MPa were mixed at a mass ratio of 30:70, and this mixture was used as a carbon-based material. This carbon-based material and SiOₓ (0<x≤2) as a silicon-based material were mixed at a mass ratio of 92:8, and this mixture was used as a negative electrode active material. A discharge capacity of this negative electrode active material was 510 mAh/g. This negative electrode active material, carboxymethylcellulose (CMC), and a dispersion of styrene-butadiene rubber (SBR) were mixed at a solid content mass ratio of 98:1:1, and water was used as a dispersion medium to prepare a negative electrode mixture slurry. This negative electrode mixture slurry was applied on both surfaces of copper foil with 8 µm in thickness as a negative electrode current collector, and the coating was dried and compressed. Thereafter, the cutting was conducted to a predetermined electrode size to produce a negative electrode in which negative electrode mixture layers were formed on both the surfaces of the negative electrode current collector. Table 1 shows a 1%-proof strength and a breakage elongation of the copper foil, and a porosity of the negative electrode mixture layer. On an end portion in a longitudinal direction of the negative electrode, an exposed portion where the current collector surface was exposed was provided, and a negative electrode lead was welded to this exposed portion.

### [Preparation of Electrolyte]

Ethylene carbonate (EC), ethyl methyl carbonate (EMC), and dimethyl carbonate (DMC) were mixed at a volume ratio of 3:3:4. Into this mixed solvent, lithium hexafluorophosphate (LiPF₆) was dissolved so that the concentration was 1 mol/L to prepare an electrolyte.

### [Production of Test Cell]

A lead made of aluminum was attached to the exposed portion of the positive electrode, and a lead made of nickel was attached to the predetermined position of the negative electrode. The positive electrode and the negative electrode were spirally wound with a separator made of polyethylene interposed therebetween to produce a wound electrode assembly. This electrode assembly was housed in a bottomed cylindrical exterior housing can, the electrolyte was injected thereinto, and then a sealing assembly was attached to an opening of the exterior housing can via a gasket to produce a cylindrical test cell.

### [Cycle Test]

Under a temperature environment at 25°C, the test cell was charged at a constant current of 0.2 It until a battery voltage reached 4.2 V, and then charged at a constant voltage of 4.2 V until a current value reached 0.02 It. Thereafter, the test cell was discharged at a constant current of 0.2 It until the battery voltage reached 3.0 V. These charge and discharge were specified as one cycle, and 200 cycles were performed.

### [Evaluation of Tearing and Elongation of Foil]

The test cell after the cycle test was disassembled to take out the negative electrode. Foil tearing of the negative electrode was visually observed. A case without foil tearing was determined as OK, and a case with foil tearing was determined as NG. As for elongation, a length of a side in a width direction (a side parallel to an axial direction of the electrode assembly) of the negative electrode was measured, and an amount of elongation was calculated from a length of the side in the width direction of the negative electrode before incorporation into the test cell.

### <Examples 2 to 7 and Comparative Examples 1 to 3>

Test cells were produced and evaluated in the same manner as in Example 1 except that, in the production of the negative electrode, the mass proportion of SiO relative to the total mass of the artificial graphite and SiO was changed, copper foil having different characteristics (thickness, 1%-proof strength, and breakage elongation) was used, and the porosity of the negative electrode mixture layer and the particle fracture strengths of the carbon-based materials A and B and the mixing ratio thereof were changed, as shown in Table 1. Table 1 also shows discharge capacities of the negative electrode active materials in Examples and Comparative Examples.

Table 1 shows the evaluation results of the test cells of Examples and Comparative Examples. The amount of elongation of the foil of the test cell is a value relative to an amount of elongation in Comparative Example 2 being a standard (100). A case where the relative value was less than or equal to 90 was determined as OK, and a case where the relative value was more than 90 was determined as NG.

**[Table 1]**

| | Proportion of silicon-based material [mass%] | Discharge capacity CA of negative electrode active material [mAh/g] | Negative electrode current collector | | | CA/(CM × CT) | Negative electrode mixture layer | | | Evaluation results of negative electrode current collector | | |
|---|---|---|---|---|---|---|---|---|---|---|---|---|
| | | | Thickness CT [µm] | 1%-proof strength CM [N/mm²] | Breakage elongation [%] | | Carbon-based material | | | Determination on foil tearing | Elongation | |
| | | | | | | | Particle fracture strength [MPa] | | Proportion of A A/(A+B) [mass%] | | | |
| | | | | | | | A | B | | | Amount | Determin -ation |
| Example 1 | 8 | 510 | 8 | 550 | 4 | 0.12 | 7 | 25 | 15 | OK | 50 | OK |
| Example 2 | 8 | 510 | 8 | 550 | 4 | 0.12 | 7 | 25 | 20 | OK | 56 | OK |
| Example 3 | 8 | 510 | 8 | 550 | 4 | 0.12 | 7 | 25 | 50 | OK | 62 | OK |
| Example 4 | 15 | 620 | 8 | 550 | 4 | 0.14 | 10 | 30 | 10 | OK | 50 | OK |
| Example 5 | 15 | 620 | 8 | 550 | 4 | 0.14 | 10 | 30 | 30 | OK | 75 | OK |
| Example 6 | 15 | 620 | 8 | 400 | 7 | 0.19 | 10 | 30 | 40 | OK | 80 | OK |
| Example 7 | 20 | 700 | 8 | 550 | 4 | 0.16 | 15 | 38 | 10 | OK | 47 | OK |
| Comparative Example 1 | 8 | 510 | 8 | 550 | 4 | 0.12 | 5 | 5 | 15 | NG | 90 | OK |
| Comparative Example 2 | 15 | 620 | 8 | 550 | 4 | 0.14 | 5 | 7 | 15 | NG | 100 | NG |
| Comparative Example 3 | 20 | 700 | 8 | 550 | 4 | 0.16 | 7 | 10 | 15 | NG | 99 | NG |

As shown in Table 1, the negative electrodes of Examples exhibited no foil tearing after the charge-discharge cycle, and small amount of elongation. Meanwhile, the negative electrodes of Comparative Examples were determined as NG about either the foil tearing or the amount of elongation.

### REFERENCE SIGNS LIST

10 Lithium-ion secondary battery, 11 Positive electrode, 12 Negative electrode, 13 Separator, 14 Electrode assembly, 16 Exterior housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket

## Claims

1. A lithium-ion secondary battery, comprising:
a positive electrode;
a negative electrode;
a separator that separates the positive electrode and the negative electrode from each other; and
an electrolyte, wherein
the negative electrode has a negative electrode current collector and a negative electrode mixture layer formed on a surface of the negative electrode current collector,
the negative electrode current collector has a thickness of greater than or equal to 4 µm and less than or equal to 12 µm, and the negative electrode current collector has a 1%-proof strength of greater than or equal to 300 MPa and less than or equal to 700 MPa,
the negative electrode mixture layer includes a carbon-based material and a silicon-based material as a negative electrode active material, and the negative electrode active material has a discharge capacity of greater than or equal to 400 mAh/g and less than or equal to 750 mAh/g,
the carbon-based material includes a carbon-based material A and a carbon-based material B that have particle fracture strengths different from each other, and
the carbon-based material A has a particle fracture strength of greater than or equal to 5 MPa and less than or equal to 15 MPa, and the carbon-based material B has a particle fracture strength of greater than or equal to 25 MPa and less than or equal to 40 MPa.

2. The lithium-ion secondary battery according to claim 1, wherein the discharge capacity CA (mAh/g) of the negative electrode active material, the thickness CT (µm) of the negative electrode current collector, and the 1%-proof strength CM (N/mm²) of the negative electrode current collector satisfy a relationship of CA/(CM × CT) < 0.3.

3. The lithium-ion secondary battery according to claim 1 or 2, wherein the carbon-based material is at least one selected from the group consisting of natural graphite, artificial graphite, soft carbon, and hard carbon.

4. The lithium-ion secondary battery according to any one of claims 1 to 3, wherein a proportion of the carbon-based material A in the carbon-based material is greater than or equal to 20 mass% and less than or equal to 40 mass% relative to a total amount of the carbon-based material A and the carbon-based material B.

5. The lithium-ion secondary battery according to any one of claims 1 to 4, wherein the silicon-based material includes an ion-conductive phase, silicon particles dispersed in the ion-conductive phase, and a coating layer that covers a surface of the ion-conductive phase.

6. The lithium-ion secondary battery according to claim 5, wherein the ion-conductive phase is at least one selected from the group consisting of a silicate phase, an amorphous carbon phase, and a silicide phase.

7. The lithium-ion secondary battery according to claim 5 or 6, wherein the ion-conductive phase includes at least one element selected from the group consisting of alkali metal elements and Group II elements.

8. The lithium-ion secondary battery according to any one of claims 5 to 7, wherein the ion-conductive phase includes an element M, and the element M is at least one selected from the group consisting of B, Al, Zr, Nb, Ta, V, La, Y, Ti, P, Bi, Zn, Sn, Pb, Sb, Co, Er, F, and W.

9. The lithium-ion secondary battery according to any one of claims 1 to 8, wherein a proportion of the silicon-based material in the negative electrode active material is greater than or equal to 5 mass% and less than or equal to 30 mass% relative to a total amount of the carbon-based material and the silicon-based material.

10. The lithium-ion secondary battery according to any one of claims 1 to 9, wherein the negative electrode current collector is copper having a crystal grain size of greater than or equal to 0.2 µm and less than or equal to 2 µm.

11. The lithium-ion secondary battery according to any one of claims 1 to 10, wherein the negative electrode current collector has a breakage elongation of greater than or equal to 2% and less than or equal to 9%.
